# EUROPEAN PATENT APPLICATION

(11) **EP 1 308 845 A1**
(43) Date of publication of application: **07.05.2003**
(21) Application number: 02257375.2
(22) Date of filing: 23.10.2002
(51) Int. Cl.: G06F 12/02

(54) **Method and apparatus for scoped memory**

(30) Priority: 23.10.2001 US 343793 P
(71) Applicant: Sun Microsystems, Inc., Santa Clara, California 95054 (US)
(72) Inventor: Bollella, Gregory, San Francisco 94110, California (US); Hardin, David S., Cedar Rapids 52402, Iowa (US); Robbins, Scott D., Pittsburgh 15213, Pennsylvania (US); Dibble, Peter, Des Moines 50325, Iowa (US); Solanki, Pratik, Pittsburgh 15232, Pennsylvania (US); Brosgol, Benjamin M., Belmont 02478, Massachusetts (US)
(74) Representative: Collins, John David

(57) **Abstract**

An invention is provided for managing memory that includes a heap memory and scoped memory is disclosed in a further embodiment of the present invention. The scoped memory is managed separately from the heap memory, and includes defining a scope tree structure having a root node and a plurality of child nodes. The child nodes are capable of having respective child nodes, however each child node has only one parent node. Each child node corresponds to a scoped memory space that forms a logical memory pool corresponding to a particular scoped memory. During memory management, a thread is allowed to enter a particular child node only through the parent node of the particular child node. In this manner, a thread executing in a particular scooped memory space allocates memory from the scoped memory corresponding to the particular scoped memory space.

## Description

### BACKGROUND OF THE INVENTION

### 1. Field of the Invention

This invention relates generally to computer memory, and more particularly to heap memory spaces with limited lifetimes.

### 2. Description of the Related Art

In computer programming, the free memory available for a program to utilize is known as the heap. When data objects such as arrays, records, and other data structures are created, space for the object is allocated in the heap. The term "object" is used herein to denote generally any piece of memory. For example, Figure 1A is a diagram showing a portion of heap memory 100. Generally, a pointer 102 can be used to reference an object 104 in the heap memory 100. Specifically, when a computer program needs to access the heap memory 100, the program can allocate a portion of the heap memory 100 using an allocation function provided in the language or memory management library. The allocation function often returns a reference or pointer 102 that can be used to access the allocated portion of the heap 100.

When the object 104 is no longer needed, its space is freed in order that the heap 100 does not become saturated with objects 104 that are no longer required for the computation. In some computer programming languages, such as Pascal or C, typically require programmer to attend to reclamation of heap 100 manually using a free function. This is known as manual memory management. In manual memory management, the programmer keeps track of when an object can be safely discarded. This manual heap maintenance is feasible, although prone to errors because too many allocations or too few deallocations can corrupt the memory.

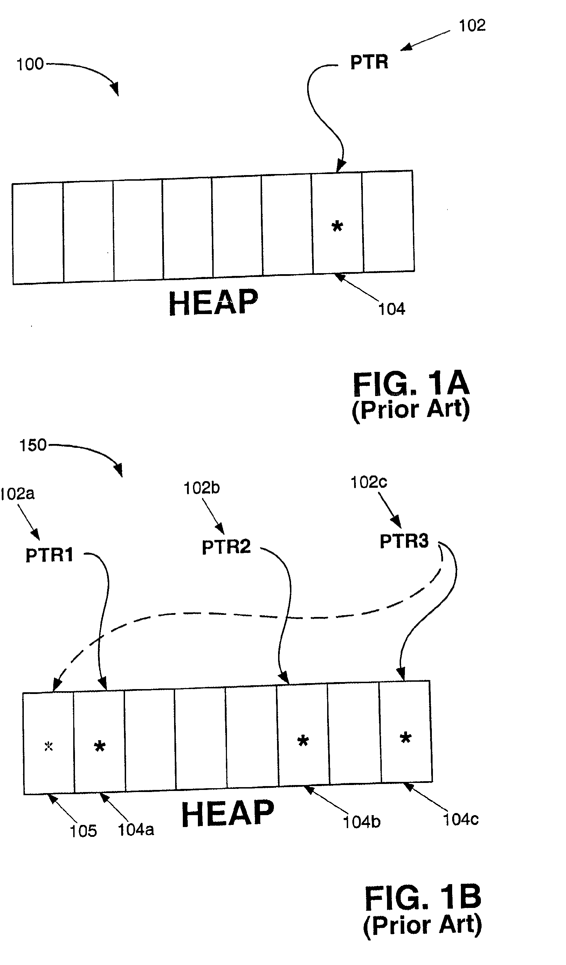

The continuing need to avoid such errors has rendered systems and languages supporting garbage collected heaps very attractive. Developing software in such environments is much faster because garbage collection eliminates a large class of programmer errors, both in the design and implementation stages. Figure 1B is a diagram showing an automatic memory management heap 150. As above, pointers 102a-102c can be used to access objects 104a-104c in the heap 150. Also, as above, these pointers 102a-102c are generally created using an allocation function. However, instead of manual free operations being performed by the programmer, a garbage collector is used to manage the memory.

During operation the garbage collector examines the heap 150 and determines which areas of the heap 150 no longer have pointers 102a-102c referencing them, and are thus available for reclaimation. The garbage collector then reclaims these heap areas, which are then available to be reallocated. Although automatic memory management provides a safe and stable operating environment that is less error prone, the non-deterministic nature of automatic memory management makes it unfavorable for use in some applications, such as real-time programming.

Real-time programs often need direct access to the heap to perform certain operations. Unfortunately an automatic memory management system generally does not allow the programmer to access the heap when the garbage collector is in operation. This ensures the memory does not get corrupted as a result of heap alterations during garbage collection.

For example, Figure 1B shows pointer 3 102c referencing object 104c in the heap 150. Suppose, during a garbage collection operation, the garbage collector examines the heap 150 and determines that heap area 150 is no longer referenced by a pointer and is thus available for reclaimation. If the programmer were then allowed to alter pointer 3 102c to point to an object in heap area 105 before the garbage collector completed the clean up operation, the heap memory 150 could be corrupted. In particular, since the garbage collector had previously determined that heap area 105 was available for reclaimation, the garbage collector would free heap area 105, thus eliminating the object pointer 3 102c references. Later, when the application attempts to utilize the eliminated object, problems will occur.

The time period in which an automatic memory management system locks out an application from the heap 150 is known as the minimum preemption interval. During the minimum preemption interval the garbage collector has exclusive access to the heap 150. However, the minimum preemption interval is actually the minimum time the garbage collector needs to safely exit after beginning operation. More importantly, the minimum preemption interval does not guarantee any cleanup work is done on the heap 150. Thus, in certain situations, an application can continuously access the heap in intervals close to the minimum preemption interval. In these situations, unreferenced objects in the heap may not be reclaimed, thus eventually depleting the heap 150 of memory.

In view of the foregoing, there is a need for a method that provides the deterministic nature of manual memory management and the stability of automatic memory management. The method should reduce or eliminate the minimum preemption interval needed for garbage collection, and provide safe access to heap memory.

### SUMMARY OF THE INVENTION

Broadly speaking, embodiments of the present invention fills these needs by providing memory management that includes the deterministic nature of manual memory management and the stability of automatic memory management. In one embodiment, a method for managing memory that includes a heap memory and scoped memory is disclosed. The scoped memory is managed separately from the heap memory, and includes defining a scope tree structure having a root node and a plurality of child nodes. The child nodes are capable of having respective child nodes, however each child node has only one parent node. In addition, during memory management, a thread is allowed to enter a particular child node only through the parent node of the particular child node.

A further method for managing memory that includes a heap memory and scoped memory is disclosed in a further embodiment of the present invention. As above, the scoped memory is managed separately from the heap memory, and includes defining a scope tree structure having a root node and a plurality of child nodes. Also, the child nodes are capable of having respective child nodes, however each child node has only one parent node. Each child node corresponds to a scoped memory space that forms a logical memory pool corresponding to a particular scoped memory. In addition, during memory management, a thread is allowed to enter a particular child node only through the parent node of the particular child node. In this manner, a thread executing in a particular scooped memory space allocates memory from the scoped memory corresponding to the particular scoped memory space.

In a further embodiment, a computer program embodied on a computer readable medium for managing memory that includes a heap memory and scoped memory is disclosed. The computer program includes a code segment that defines a scope tree structure having a root node and a plurality of child nodes, where the child nodes are capable of having respective child nodes, and each child node has only one parent node. In addition, the computer program includes a code segment that allows a thread to enter a particular child node only through the parent node of the particular child node. Other aspects and advantages of the invention will become apparent from the following detailed description, taken in conjunction with the accompanying drawings, illustrating by way of example the principles of the invention.

### BRIEF DESCRIPTION OF THE DRAWINGS

The invention, together with further advantages thereof, may best be understood by reference to the following description taken in conjunction with the accompanying drawings in which:
Figure 1A is a diagram showing a portion of heap memory;
Figure 1B is a diagram showing an automatic memory management heap;
Figure 2A is a diagram showing a heap providing scoped memory, in accordance with an embodiment of the present invention;
Figure 2B is a logical diagram illustrating a thread having an independent scoped memory, in accordance with an embodiment of the present invention;
Figure 3A is a diagram showing a scoped memory object, in accordance with an embodiment of the present invention;
Figure 3B is a diagram showing two threads and having nested references to scoped memory areas;
Figure 4 is graph showing a scoped tree, in accordance with an embodiment of the present invention; and
Figure 5 is a diagram showing an exemplary scope stack, in accordance with an embodiment of the present invention.

### DETAILED DESCRIPTION OF THE PREFERRED EMBODIMENTS

Embodiments are disclosed for scoped memory that provides heap memory spaces with limited lifetimes. In the following description, numerous specific details are set forth in order to provide a thorough understanding of the present invention. It will be apparent, however, to one skilled in the art that the present invention may be practiced without some or all of these specific details. In other instances, well known process steps have not been described in detail in order not to unnecessarily obscure the present invention.

Embodiments of the present invention provide memory management that includes the deterministic nature of manual memory management and the stability of automatic memory management. As such, embodiments of the present invention are particularly useful for real-time programming using an object-oriented computer programming language, such as Java.

However, it should be noted that other programming languages in addition to Java may be used to implement the embodiments of the present invention, including both procedural and object oriented programming languages. Object-oriented programming is a method of creating computer programs by combining certain fundamental building blocks, and creating relationships among and between the building blocks. The building blocks in object-oriented programming systems are called "objects." An object is a programming unit that groups together a data structure (instance variables) and the operations (methods) that can use or affect that data. Thus, an object consists of data and one or more operations or procedures that can be performed on that data. The joining of data and operations into a unitary building block is called "encapsulation."

An object can be instructed to perform one of its methods when it receives a "message." A message is a command or instruction to the object to execute a certain method. It consists of a method selection (name) and a plurality of arguments that are sent to an object. A message tells the receiving object what operations to perform.

One advantage of object-oriented programming is the way in which methods are invoked. When a message is sent to an object, it is not necessary for the message to instruct the object how to perform a certain method. It is only necessary to request that the object execute the method. This greatly simplifies program development.

Object-oriented programming languages are predominantly based on a "class" scheme. A class defines a type of object that typically includes both instance variables and methods for the class. An object class is used to create a particular instance of an object. An instance of an object class includes the variables and methods defined for the class. Multiple instances of the same class can be created from an object class. Each instance that is created from the object class is said to be of the same type or class.

A hierarchy of classes can be defined such that an object class definition has one or more subclasses. A subclass inherits its parent's (and grandparent's etc.) definition. Each subclass in the hierarchy may add to or modify the behavior specified by its parent class.

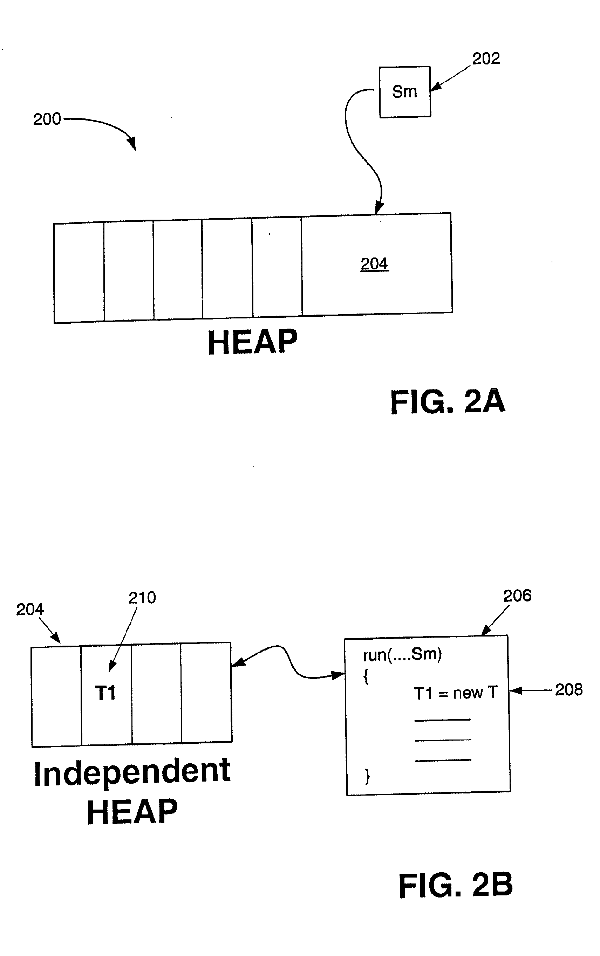

With the above in mind, Figure 2A is a diagram showing a heap 200 providing scoped memory, in accordance with an embodiment of the present invention. Within the heap 200 is a scoped memory 204, which is referenced by a scoped memory object Sm 202. The scoped memory 204 performs as an independent heap having a limited lifetime, as described in greater detail next with reference to Figure 2B.

Figure 2B is a logical diagram illustrating a thread 206 having an independent scoped memory 204, in accordance with an embodiment of the present invention. When the thread 206 is passed the scoped memory reference 202 and started, the thread 206 runs with the scoped memory 204 "attached." In particular, the thread 206 operates as though the scoped memory 204 is the heap. The thread 206 can create new objects within the scoped memory 204 using normal allocation functions. For example, in Figure 2B the thread 206 includes an allocation function 208 to create a new object T1 of type T. As a result, the object T1 is placed in the scoped memory 204 at scoped memory area 210 and can be referenced by the thread 206 thereafter as a normal object.

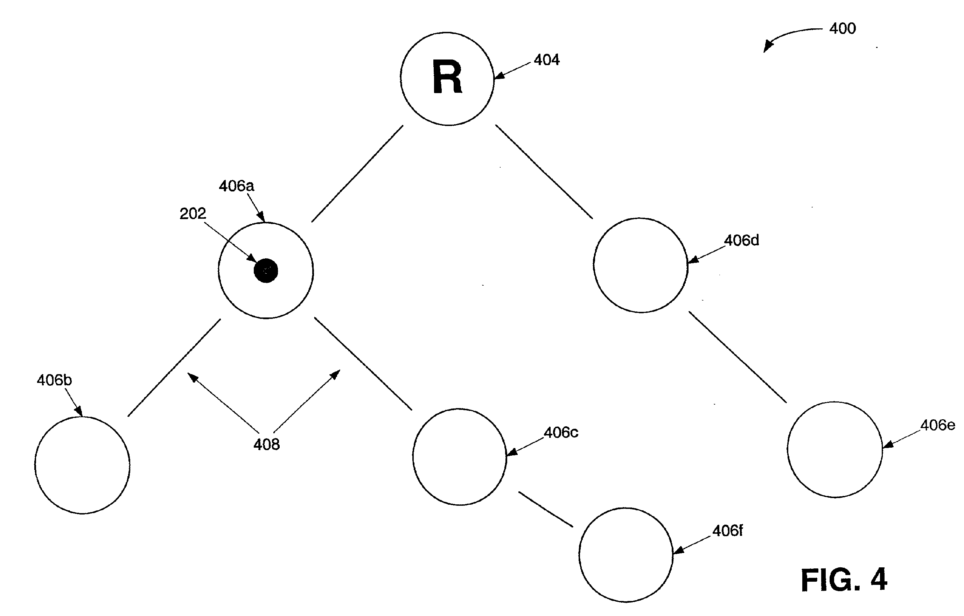

No garbage collection is performed on scoped memory 204. Thus, there is no minimum preemption interval in which the application is excluded from the scoped memory 204. Thus, the thread 206 can operate with objects in the scoped memory 204 independently and without fear of being collected. In addition, the scoped memory 204 can be shared with other threads using predetermined rules, as described in greater detail below with reference to Figure 4. Briefly, a thread can access the scoped memory 204 by entering the scope of the scoped memory 204 using a enter() method. As a result, multiple threads can utilize a single scoped memory 204, which will remain valid as long as there are threads with access to it. The number of threads with access to objects within a scoped memory is indicated using a reference counter.

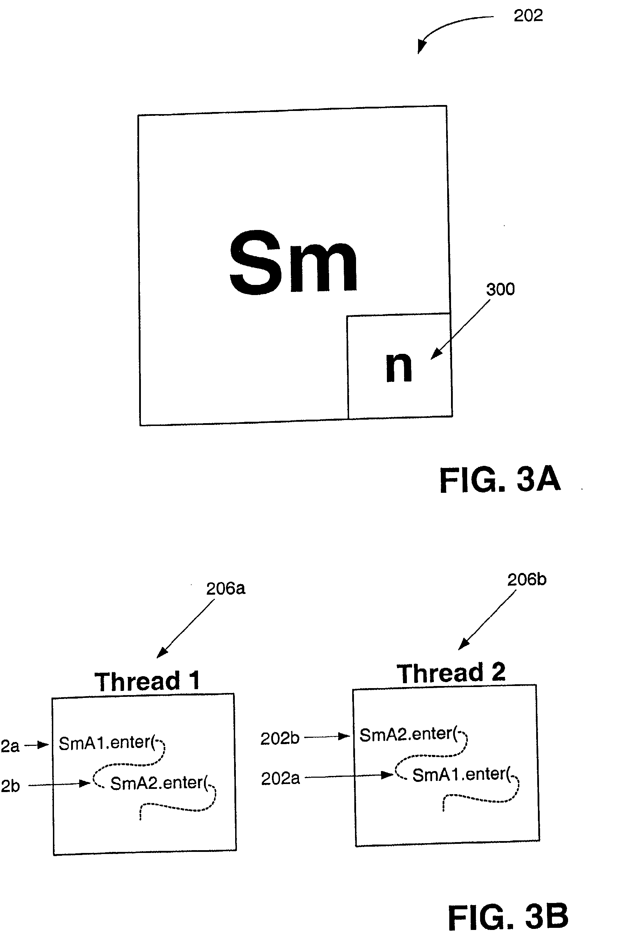

Figure 3A is a diagram showing a scoped memory object 202, in accordance with an embodiment of the present invention. Among other components, the scoped memory object 202 includes a reference counter 300. The reference counter indicates the number of threads having access to objects within the scoped memory space referenced by scoped memory object 202. When the scoped memory object 202 is entered by a thread using a enter() method, the reference counter 300 is increased. Conversely, when a thread exits the scoped memory space referenced by scoped memory object 202, the reference counter 300 is decreased. When the reference counter 300 reaches zero, no objects are being referenced within the scoped memory space referenced by the scoped memory object 202. After the last reference to objects within the scoped memory space referenced by the scoped memory object 202 is removed by exiting the thread or exiting the enter() method, and before the scoped memory is reused, finalizers are run for all objects in the scoped memory area, and the scoped memory area is emptied. Thus, objects allocated from a scoped memory area have a unique lifetime. In particular, the objects cease to exist after the reference counter 300 for the scoped memory object 202 goes to zero.

However, unrestricted access to scoped memories can lead to memory corruption, in particular, when nested references to scoped memories are executed. Figure 3B is a diagram showing two threads 206a and 206b having nested references to scoped memory areas. In particular, thread 206a first enters scoped memory SmA1 202a, and then enters scoped memory SmA2 202b from SmA1 202a. Thread 206b first enters scoped memory SmA2 202b, and then enters scoped memory SmA1 202a from SmA2 202b. This type of nested referencing to scoped memory areas can cause the reference counters of the scoped memory objects 202a and 202b to increment and decrement incorrectly, thus making the reference counters no longer consistent with the scoped memory. To avoid this situation embodiments of the present invention utilize a scoped tree, as discussed next with reference to Figure 4.

Figure 4 is graph showing a scoped tree 400, in accordance with an embodiment of the present invention. The scoped tree 400 includes a plurality of nodes 406a-406e, each representing a scoped memory scope. The scoped tree 400 further includes a plurality of edges 408 connecting the scoped memory spaces 406a-406e. The scoped tree 400 is an undirected acyclic graph with a single root node 404, which represents the global system heap. Further, the scope tree 400 is global and thus accessible by all threads on the system.

During operation, a new scoped memory space can be created in a manner similar to allocating general objects. In particular, a modified allocation function, such as "new," can be used to create a scoped memory object 202, which is placed in the current memory space. For example, if the current memory space is scoped memory space 406a, a newly created scoped memory object 202 would be placed within the scoped memory space 406a. The newly created scoped memory object 202 can then be used to reference a new scoped memory space. For example, a thread executing in scoped memory space 406a can utilize the scoped memory object 202 to enter a new scoped memory space 406b referenced by the scoped memory object 202. The current scoped memory space from which the new scoped memory space is first entered becomes the "parent" of the new scoped memory space. For example, since the thread was executing in scoped memory space 406a when it entered new scoped memory space 406b, scoped memory space 406a becomes the "parent" scoped memory space 406b.

As mentioned above, a modified allocation function, such as "new," can be used to create a scoped memory object 202, which is placed in the current memory space. Upon creation of the scoped memory object 202, the scoped memory space 406b referenced by the scoped memory object 202 can be entered using a scoped memory space entry method, referred to hereafter as a ".enter() method." The .enter() method draws an edge 408 between the parent memory space and the new memory space, which becomes the "child" memory space. For example, a thread executing in scoped memory space 406a can call a .enter() method for the scoped memory object 202 to enter scoped memory space 406b. In this case, scoped memory space 406b is the child of scoped memory space 406a, because scoped memory space 406b was entered from scoped memory space 406a. It should be born in mind that a new scoped memory space can be entered from a scoped memory space other than the scoped memory space in which the related scoped memory object is located. For example, the scoped memory object 202 can be created in scoped memory space 406a and not utilized for a period of time. Thereafter, a thread executing in scoped memory space 406c can call a .enter() method for the scoped memory object 202 to enter a new scoped memory space 406f, which is referenced by scoped memory object 202 in this example. In this case, scoped memory space 406c is the parent of scoped memory space 406f, even though the scoped memory object 202 is located in scoped memory space 406a.

To reduce or eliminate the above mentioned nested referencing errors, which can cause the reference counters to increment and decrement incorrectly, embodiments of the present invention utilize a single parent rule. Specifically, the scope tree 400 requires each memory space node 406a-406e to have either zero or one parent node. That is, a single memory space node 406a-406e cannot have more than one parent node. For example, once scoped memory space 406a is established as the parent of scoped memory space 406b, scoped memory space 406b can only be entered via scoped memory space 406a.

To do otherwise would result in scoped memory space 406b having more than one parent, thus violating the single parent rule. For example, a thread operating within scoped memory space 406d cannot perform a .enter() to directly enter scoped memory space 406b from scoped memory space 406d. To do so would result in scoped memory space 406b having both scoped memory space 406a and scoped memory space 406d as parents, which is a situation prohibit under the single parent rule.

The embodiments of the present invention further utilize an access rule that allows referencing down the scoped tree 400, but prohibits referencing up the scoped tree 400. For example, a thread operating within scoped memory space 406b can reference objects in scoped memory space 406a, but a thread operating within scoped memory space 406a cannot reference objects in scoped memory space 406b. To access objects in scoped memory space 406b, a thread operating in scoped memory space 406a should first enter scoped memory space 406b via a .enter() method.

The access rule ensures that referenced objects will be in existence whenever referenced. Objects within memory spaces above the current memory space in the scoped tree 400 have longer lifetimes than objects lower in the scoped tree 400 because scoped memory spaces lower on the scoped tree 400 must be exited and cleaned up before the scoped memory spaces above them. As a result, if a thread is allowed to reference down the scoped tree 400 a dangling pointer can occur if the lower scoped memory space is completely exited and cleaned up. For example, if a thread operating in scoped memory space 406a referenced an object in scoped memory space 406b, finalizers could be run for all objects in the scoped memory area 406b and the scoped memory area emptied when the reference counter reached zero. As a result, the object referenced from scoped memory space 406a could be eliminated even though it is being referenced, resulting in a dangling pointer.

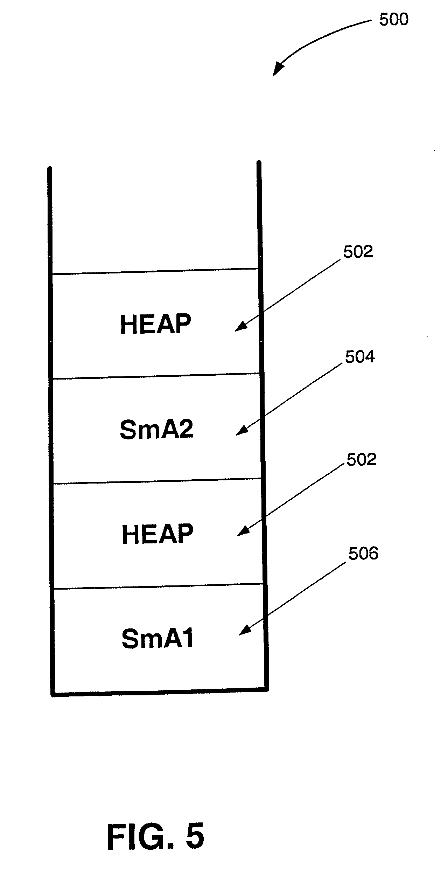

To allow easy traversing of the scoped tree 400 and allow threads to examine histories of memory spaces, embodiments of the present invention utilize scope stacks. Figure 5 is a diagram showing an exemplary scope stack 500, in accordance with an embodiment of the present invention. A scope stack 500 is provided local to each thread, and allows the thread to examine the sequence of memory areas that been entered or used as arguments for the thread constructor up to the current point in the thread execution. Specifically, as each memory space is entered, or used as an argument to a constructor, a reference to the memory space is pushed onto the local scope stack 500 for the thread. For example, Figure 5 shows an exemplary scope stack 500 for a thread that has entered scoped memory area SmA1 506, the heap 502, scoped memory area SmA2 504, and is currently back in the heap 502 memory space.

In addition to utilizing scoped memory having limited lifetimes, embodiments of the present invention further allow applications to enter and reference objects in non-scoped memory spaces, such as the system heap. Such non-scoped memory spaces generally do not have the same entry and referencing restrictions applied to scoped memory spaces. As a result, non-scoped memory areas can be entered and referenced from any memory space, generally without restriction.

Hence, the scoped tree 400 alone cannot be utilized to determine the memory spaces entered or utilized by a particular thread because non-scoped memory spaces are not represented in the scope tree 400. The scope stack 500 allows the non-scoped memory spaces, as well as the scoped memory spaces, to be accounted for when examining a history of entered memory spaces. As a result, a thread can utilize its local scope stack 500 to, for example, look back three memory spaces and reference something in that memory space.

Although the foregoing invention has been described in some detail for purposes of clarity of understanding, it will be apparent that certain changes and modifications may be practiced within the scope of the appended claims. Accordingly, the present embodiments are to be considered as illustrative and not restrictive, and the invention is not to be limited to the details given herein, but may be modified within the scope of the appended claims.

Embodiments of the invention may be implemented on a programmable processing apparatus such as a computer, or a processor. Methods in accordance with embodiments of the invention may be embodied as computer readable code carried on a carrier medium which could be a transcient carrier medium such as a signal or a storage carrier medium such as memory. These methods may also be embodied as a specifically configured apparatus such as an ASIC or a programmable logic gate array.

Embodiments of the invention may also be implemented as manufacturing instructions to produce such a specifically configured apparatus. For example this may be a hardware description language code such as a Verilog code which when run on an appropriate manufacturing process specifically configures a configurable apparatus such as an ASIC or programmable logic gate array to implement methods in accordance with embodiments of the invention. Implementation may also take the form of code which dynamically configures reconfigurable apparatus such as re-programmable logic gate arrays to implement these methods.

## Claims

1. A method of managing memory, the memory including of a heap memory and scoped memory, the method comprising:
managing the scoped memory separately from the heap memory, the managing of the scoped memory including,
defining a scope tree structure having a root node and a plurality of child nodes, the child nodes capable of having respective child nodes, wherein each child node has only one parent node; and
allowing a thread to enter a particular child node only through the parent node of the particular child node.

2. A method as recited in claim 1, wherein the root node corresponds to heap memory space.

3. A method as recited in claim 1 or 2, wherein each child node corresponds to a scoped memory space, and wherein the scoped memory space forms a logical memory pool corresponding to a particular scoped memory.

4. A method as recited in claim 3, wherein a thread executing in a particular scoped memory space allocates memory from the scoped memory corresponding to the particular scoped memory space.

5. A method as recited in claim 4, wherein a thread executing in a particular scoped memory space can reference data associated with a scoped memory space at a higher level on the scoped tree structure.

6. A method as recited in claim 5, wherein a thread executing in a particular scoped memory space is prevented from referencing data associated with a scoped memory space at a lower level on the scoped tree structure.

7. A method as recited in claim 6, wherein entering a particular child node allows a thread to allocate memory from a scoped memory corresponding to a scoped memory space associated with the particular child node.

8. A method as recited in claim 7, wherein a thread enters the particular child node utilizing a method call associated with the scoped memory space associated with the particular child node.

9. A method as recited in any one preceding claim, wherein each scoped memory is referenced using a scoped memory object.

10. A method as recited in claim 9, wherein a thread enters the particular child node by passing a scoped memory object to the thread, wherein the scoped memory object corresponds to the scoped memory space associated with the particular child node.

11. A computer program embodied on a computer readable medium for managing memory, the memory including of a heap memory and scoped memory, comprising:
a code segment that defines a scope tree structure having a root node and a plurality of child nodes, the child nodes capable of having respective child nodes, wherein each child node has only one parent node; and
a code segment that allows a thread to enter a particular child node only through the parent node of the particular child node.

12. A computer program as recited in claim 11, wherein each child node corresponds to a scoped memory space, and wherein the scoped memory space forms a logical memory pool corresponding to a particular scoped memory.

13. A computer program as recited in claim 12, wherein a thread executing in a particular scooped memory space allocates memory from the scoped memory corresponding to the particular scoped memory space.

14. A computer program as recited in claim 13, wherein a thread executing in a particular scope memory space can reference data associated with a scoped memory space at a higher level on the scoped tree structure.

15. A computer program as recited in claim 14, wherein a thread executing in a particular scoped memory space if prevented from referencing data associated with a scoped memory space at a lower level on the scoped tree structure.

16. A computer program as recited in any one of claims 11 to 15, wherein each scoped memory is referenced using a scoped memory object, wherein a thread enters the particular child node by passing a scoped memory object to the thread, the scoped memory object corresponding to the scoped memory space associated with the particular child node.

17. An apparatus for managing memory including a heap memory and a scoped memory, the apparatus comprising:
means for managing the scoped memory separately from the heap memory, said scoped memory managing means including,
means for defining a scope tree structure having a root node and a plurality of child nodes, the child nodes capable of having respective child nodes, wherein each child node has only one parent node; and
means for allowing a thread to enter a particular child node only through the parent node of the particular child node.

18. A method of manufacturing an apparatus for managing memory, the memory including a heap memory and scoped memory; the method comprising configuring a configurable device to carry out the method of any one of claims 1 to 10.

19. An apparatus for managing memory, the memory including a heap memory and scoped memory; the apparatus configured to carry out the method of any one of claims 1 to 10 and 18.

20. A carrier medium carrying processor readable code for controlling a processor to carry out the method of any one of claims 1 to 10 and 18.
